(19) **Europäisches Patentamt**
**European Patent Office**
**Office européen des brevets**

(11) **EP 3 372 954 B1**

(12) **EUROPEAN PATENT SPECIFICATION**

(45) Date of publication and mention
of the grant of the patent:
**15.05.2019 Bulletin 2019/20**

(51) Int Cl.:
***G01B 21/30*** *(2006.01)*

(21) Application number: **18153686.3**

(22) Date of filing: **26.01.2018**

(54) **ARITHMETIC UNIT, METHOD AND PROGRAM FOR COMPUTING A CONTACT CONDITION BETWEEN TWO SURFACES**

ARITHMETISCHE EINHEIT, VERFAHREN UND PROGRAMM ZUR BERECHNUNG EINER KONTAKTBEDINGUNG ZWISCHEN ZWEI OBERFLÄCHEN

UNITÉ ARITHMÉTIQUE, PROCÉDÉ ET PROGRAMME POUR CALCULER UNE CONDITION DE CONTACT ENTRE DEUX SURFACES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.03.2017 JP 2017044992**
**19.06.2017 JP 2017119810**

(43) Date of publication of application:
**12.09.2018 Bulletin 2018/37**

(73) Proprietor: **Kabushiki Kaisha Toyota Chuo Kenkyusho**
**Nagakute-shi, Aichi 480-1192 (JP)**

(72) Inventors:
• **TOMOTA, Tatsunori**
**Nagakute-shi, Aichi 480-1192 (JP)**
• **KONDOH, Yasuhiro**
**Nagakute-shi, Aichi 480-1192 (JP)**
• **OHMORI, Toshihide**
**Nagakute-shi, Aichi 480-1192 (JP)**

(74) Representative: **Kramer Barske Schmidtchen**
**Patentanwälte PartG mbB**
**European Patent Attorneys**
**Landsberger Strasse 300**
**80687 München (DE)**

(56) References cited:
**WO-A1-97/17695** **CN-B- 102 609 560**

EP 3 372 954 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND

Technical Field

The present invention relates to an arithmetic unit and a program, and in particular to an arithmetic unit for computing a contact condition between two surfaces, and a program of the same.

Related Art

In conventional technology, for contact between surfaces, the contact area and the normal force are computed by employing the Greenwood and Williamson (1966) model (GW model) (see Japanese National-Phase Publication No. 2000-500604, which has patent family member WO 97/17695). Japanese National-Phase Publication No. 2000-500604 describes a design method for surface roughness distribution that employs a probability density function in contact modeling to determine a skewness value and kurtosis value that minimize kinetic friction. The method of such conventional technology is a method useful for simplifying calculations.

However, conventional technology, such as that described in Japanese National-Phase Publication No. 2000-500604, can be said to have inadequate calculation precision and applicable range due to the issues given below.

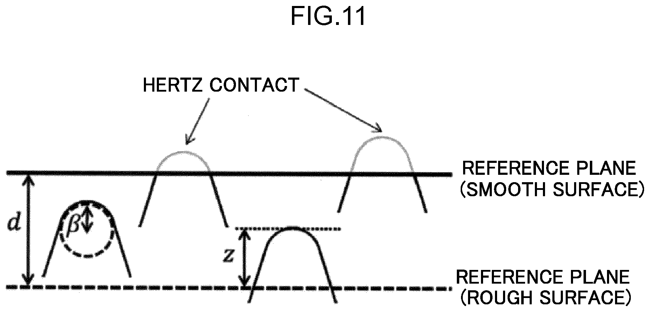

A first issue that can be raised with the GW model is that, as illustrated in Fig. 11, the GW model assumes contact between a rough surface and a smooth surface, and is not able to handle contact between rough surfaces directly. In cases in which the asperity height distribution of two rough surfaces is assumed to be a Gaussian distribution used in probability theory and statistics, although contact between rough surfaces can be modeled as contact between a composite rough surface and a smooth surface, a conventional method is not applicable to cases in which the asperity height distribution is a non-Gaussian distribution. Thus, conventional technology can only be employed for calculations in the limited range of a rough surface and a smooth surface.

A second issue is that due to the asperity height distribution in the GW model being a Gaussian distribution, in conventional technology, the asperity height distribution is sometimes calculated by substitution with a Pearson distribution. As is clear from analysis undertaken hitherto (Nayak (1971)), even if the roughness distribution is a Gaussian distribution, the asperity height distribution is not normally a Gaussian distribution. Thus, for a roughness distribution, direct transformation of the asperity height distribution from a Gaussian distribution by using a Pearson distribution is a mistake. Moreover, skewness and kurtosis of rough surfaces are present in roughness distributions, and it is not appropriate to transform an asperity height distribution so as to give a specified skewness and kurtosis.

In consideration of the above circumstances, an object of the present invention is to provide an arithmetic unit, method, and program capable of computing a contact state between rough surfaces that each have a respective specified skewness and kurtosis.

SUMMARY

In order to achieve the above object, an arithmetic unit according to a first aspect of the invention is an arithmetic unit that predicts a contact area or a normal force arising in a case in which two rough surfaces are in contact with each other. The arithmetic unit includes: a setting section that sets surface characteristics including a skewness and a kurtosis for each of the two rough surfaces as calculation conditions; a distribution computation section that, based on the calculation conditions, acquires for each of the two rough surfaces a roughness distribution, which is a probability density function defining a probability of a height from a reference plane being a particular height, corresponding to a combination of skewness and kurtosis, and computes from the roughness distributions an asperity height distribution, which is a probability density function defining a probability of a height of an asperity peak from a reference plane being a particular height; and a contact computation section that, based on the asperity height distribution computed for each of the two rough surfaces, computes a real contact area, which is an actual contact area in a case in which the two rough surfaces are in contact, or a normal force in a case in which the two rough surfaces are in contact.

In the arithmetic unit according to the first aspect of the invention, the distribution computation section may compute the asperity height distributions for when the roughness distributions are Johnson distributions expressed by employing parameters determined by the respective combinations of skewness and kurtosis.

Moreover, in the arithmetic unit according to the first aspect, the distribution computation section may compute the asperity height distribution by taking as the asperity height distribution a Greenwood simplified elliptic model expressing a probability density function defining a probability of a height of an asperity peak from the reference plane being a particular height and defining a probability of a curvature of an asperity peak being a particular curvature, and by the asperity height distribution transformation when the roughness distributions are given by Johnson distributions expressed by employing parameters determined by the respective combinations of skewness and kurtosis.

Moreover, in the arithmetic unit according to the first aspect, when transforming the asperity height distribution, the distribution computation section may compute the asperity height distribution so as to correct a curvature of asperity peak for each height of asperity peak according to the asperity height distribution transformation when the roughness distributions are Johnson distributions.

Moreover, in the arithmetic unit according to the first aspect, the contact computation section may compute the real contact area or the normal force by employing operators expressing integrals of the asperity height distributions integrated by calculations performed in advance, and an operator expressing an integral of a combination of two of the asperity height distributions integrated by a calculation performed in advance.

A program according to a second aspect of the present invention is a program to control an arithmetic unit that predicts a contact area or a normal force arising in a case in which two rough surfaces are in contact with each other. The program is executable by a computer to perform processing. The processing includes: setting surface characteristics including a skewness and a kurtosis for each of the two rough surfaces as calculation conditions; based on the calculation conditions, acquiring for each of the two rough surfaces a roughness distribution, which is a probability density function defining a probability of a height from a reference plane being a particular height, corresponding to a combination of skewness and kurtosis, and computing from the roughness distributions an asperity height distribution, which is a probability density function defining a probability of a height of an asperity peak from a reference plane being a particular height; and based on the asperity height distribution computed for each of the two rough surfaces, computing a real contact area, which is an actual contact area in a case in which the two rough surfaces are in contact, or a normal force in a case in which the two rough surfaces are in contact.

The arithmetic unit and the program of the present invention are capable of computing contact conditions of rough surfaces each having a specified skewness and kurtosis. This is achieved by acquiring, for each of the two rough surfaces, a roughness distribution, which is a probability density function defining a probability of a height from a reference plane being a particular height, corresponding to a combination of skewness and kurtosis, and computing from the roughness distributions an asperity height distribution, which is a probability density function defining a probability of a height of an asperity peak from a reference plane being a particular height. Then, based on the asperity height distribution computed for each of the two rough surfaces, a real contact area, which is an actual contact area, or a normal force is computed for when the two rough surfaces are in contact.

The invention is defined in the appended independent claims.

BRIEF DESCRIPTION OF THE DRAWINGS

Exemplary embodiments of the present invention will be described in detail based on the following figures, wherein:

Fig. 1 is a diagram illustrating an example of how contact between one rough surface and another rough surface is modeled in an exemplary embodiment;
Fig. 2 is a diagram illustrating an example of categories of distribution corresponding to combinations of skewness and kurtosis;
Fig. 3 is a diagram illustrating examples of the distribution shapes of skewness and kurtosis;
Fig. 4 is a diagram illustrating examples of roughness distribution and asperity height distributions;
Fig. 5 is a diagram illustrating an example of an average shape of asperities on a numerically generated rough surface;
Fig. 6 is a diagram illustrating examples of change to the shape of asperities by transformation;
Fig. 7 is a block diagram illustrating a configuration of an arithmetic unit according to an exemplary embodiment of the present invention;
Fig. 8 is a flowchart illustrating an arithmetic processing routine in an arithmetic unit according to an exemplary embodiment of the present invention;
Fig. 9 is a diagram illustrating change to the real contact area with respect to a ratio of film thickness in actual tests;
Fig. 10 is a diagram illustrating change to the real contact pressure with respect to a ratio of film thickness in actual tests; and
Fig. 11 is a diagram illustrating an example of how contact between one rough surface and a smooth surface is modeled in conventional technology.

DETAILED DESCRIPTION

Detailed description follows regarding exemplary embodiments of the present invention, with reference to the drawings.

Overview of Exemplary Embodiments of the Present Invention.

First, an overview of exemplary embodiments of the present invention will be described.

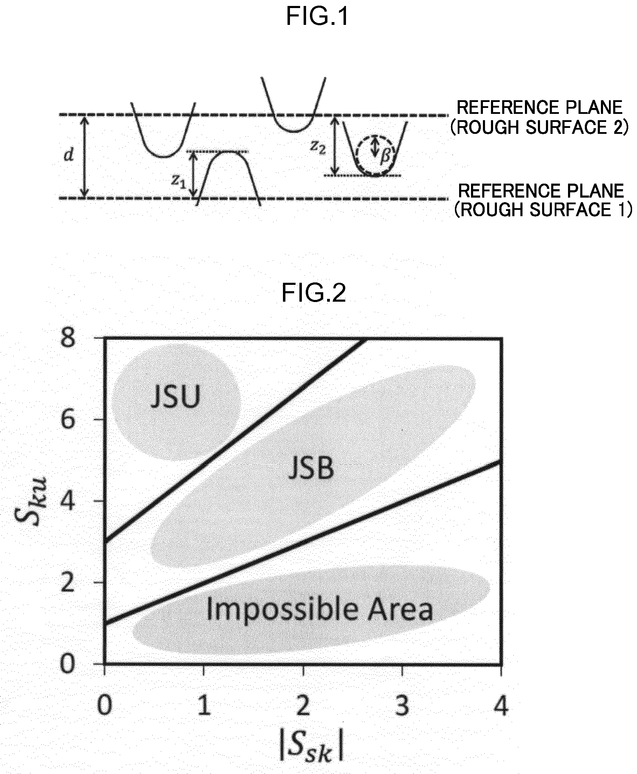

In order to address a first of the issues described above, an exemplary embodiment of the present invention uses the rationale behind the Greenwood and Tripp model (GT model), which is a roughness asperity contact model, and enables contact between rough surfaces having non-Gaussian distributions to be addressed, as illustrated in Fig. 1. Calculation may be made even for such rough surfaces having mutually different skewness and kurtosis.

In order to address the second issue described above, the exemplary embodiment of the present invention transforms an asperity height distribution with a shape having attributes of skewness and kurtosis when transforming the roughness distribution to have a specified skewness and kurtosis. The asperity height distribution prior to transformation is given by a Greenwood (2006) simplified elliptic model (GSE model) (see "A simplified elliptic model of rough surface contact", Greenwood, J. A., 2006, Wear, 261(2), pages 191-200). The calculation sequence therein is given in detail in the explanation of principles given below.

The precision is greatly improved by employing a GT model as a base, and implementing the following improvements. In a GT model, the asperity height distribution is assumed to be a Gaussian distribution, and the radius of the asperity curvature is assumed to be uniform. Due to such assumptions giving inadequate precision, the equations of the GT model are improved by employing a GSE model that employs an asperity height distribution and an asperity curvature radius distribution that are closer to those of actual rough surfaces.

Moreover, in consideration of ease of application and precision, in the exemplary embodiment of the present invention, a Johnson distribution is employed as the non-Gaussian distribution in place of a Pearson distribution. The improvements described above are only applicable to rough surfaces having roughness distributions that are Gaussian distributions, and are therefore not applicable to rough surfaces with skewness and kurtosis characteristics. Thus, a Johnson distribution is employed as the roughness distribution, so as to enable application to rough surfaces having a given skewness and kurtosis. Precision is maintained by performing a rigorous calculation for asperity height distribution transformation when employing a Johnson distribution as the roughness distribution, and by also applying a correction to change the radius of curvature.

Moreover, a real contact area, which is the actual contact area when two rough surfaces are in contact, and a normal force thereof are calculated based on Hertzian contact theory of an existing asperity contact model. When this is performed, asperities are assumed to be semi-spherical with uniform curvature; however, real asperities have a curvature that is smaller the further away from the tip. Thus, in the exemplary embodiment of the present invention, a constant scale factor correction is applied to the curvature of the original contact model to take into consideration the change to curvature of the asperities.

The improvements described above greatly expand the conditions of rough surfaces that can be investigated, and also enable predictions to be made of the real contact area that are much better than direct numerical calculations.

Principles of Exemplary Embodiments of the Present Invention

The principles of exemplary embodiments of the present invention will now be explained.

Input parameters to the arithmetic unit of the present invention are: asperity density $\eta_i$; cross-sectional curvature $\sigma_{ki}$ or average asperity curvature radius $\beta_i$; root mean square roughness $\sigma_i$; skewness $S_{ski}$, kurtosis $S_{kui}$; Young's Modulus (modulus of longitudinal elasticity) $E_i$; Poisson's ratio $v_i$; and nominal contact area $A_n$. The subscript i represents either a rough surface 1 or a rough surface 2 having the respective physical property. An outline will be given below of these parameters.

In the following explanation of principles, rough surfaces are assumed to have isotropic roughness. Moments of power spectral density P (k) (k = frequency) for a roughness profile of the Equation (1) given below are employed to compute the root mean square roughness $\sigma$, the cross-sectional curvature $\sigma_k$, and the asperity density $\eta$ using the Equations (2) given below.

$$m_n = \int_0^\infty k^n P(k)\, dk$$

$$\dots (1)$$

$$\sigma = \sqrt{m_0}$$
$$\sigma_k = \sqrt{m_4}$$
$$\eta = \frac{1}{6\pi\sqrt{3}}\frac{m_4}{m_2}$$

$$\dots (2)$$

Alternatively, instead of computing the parameters of above Equation (1) and Equations (2) from the power spectral density, actual measurement values of these parameters may by directly employed. In cases in which a GSE model is employed in the exemplary embodiment of the present invention, the average asperity curvature radius $\beta$ and the cross-sectional curvature $\sigma_k$ obtained from actual measurement have a relationship given by the Equation (3) given below.

$$\sigma_k = 0.74/\beta$$

$$\dots (3)$$

For a rough surface represented as discrete points in three dimensions, if the probability of a given point being a height z from a reference plane is defined by a probability density function (referred to below as roughness distribution function) $\varphi(z)$, then skewness $S_{sk}$ and kurtosis $S_{ku}$ are given by the Equation (4) and Equation (5) given below.

$$S_{sk} = \frac{1}{\sigma^3}\int_{-\infty}^{\infty}(z-m)^3\phi(z)dz$$

$$\dots (4)$$

$$S_{ku} = \frac{1}{\sigma^4}\int_{-\infty}^{\infty}(z-m)^4\phi(z)dz$$

$$\dots (5)$$

Wherein: m is the height of a roughness reference plane, and is normally subtracted prior to data processing, so m = 0 henceforth. When the roughness distribution function has a Gaussian distribution, $S_{sk} = 0$ and $S_{ku} = 3$. These parameters may also employ values computed automatically, such as by optical microscopy.

The Young's Modulus $E_i$ and the Poisson's ratio $v_i$ are intrinsic values for the materials, and the equivalent Young's modulus is employed to compute the normal force.

$$E' = \left(\frac{1-v_1^2}{E_1} + \frac{1-v_2^2}{E_2}\right)^{-1}$$

$$\dots (6)$$

Transformation on Asperity Height Distribution

First, a roughness distribution, which is a probability density function defining the probability of a height from the reference plane being a particular height, corresponding to a specified combination of skewness and kurtosis is determined. Examples of distribution functions for which the skewness and kurtosis can be controlled include a Pearson distribution function and a Johnson distribution function, and a Johnson distribution is employed in the exemplary embodiment of the present invention. A Johnson distribution gives rise to the Equations (7) given below as two different equations corresponding to combinations of skewness and kurtosis.

$$\phi_{JSU}(\xi) = \frac{\delta}{\lambda\sqrt{2\pi(x^2+1)}} \exp\left[-\frac{1}{2}\left(\gamma + \delta \sinh^{-1} x\right)^2\right]$$

$$\phi_{JSB}(\xi) = \frac{\delta}{\lambda\sqrt{2\pi}x(1-x)} \exp\left[-\frac{1}{2}\left(\gamma + \delta \ln\frac{x}{1-x}\right)^2\right]$$

$$x = \frac{\xi - \zeta}{\lambda}$$

$$\ldots (7)$$

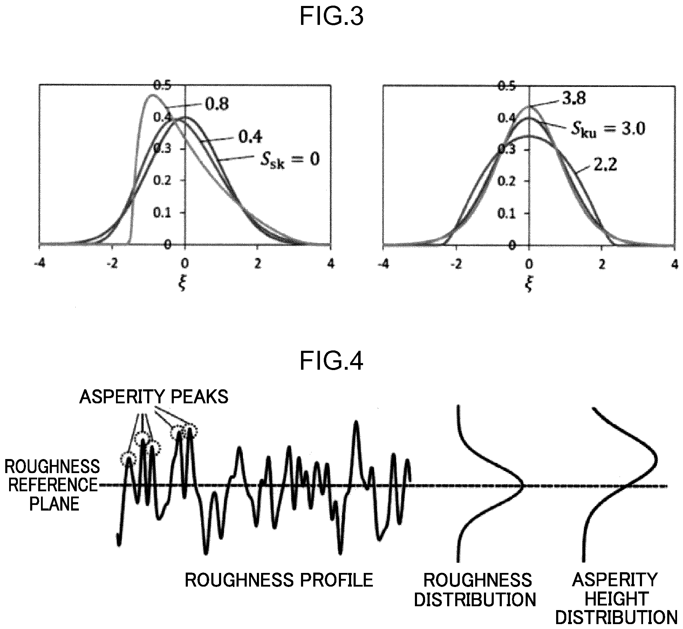

Wherein, $\xi$ is a dimensionless height at a point on a rough surface, and is the height z rendered dimensionless by taking the root mean square roughness thereof. $\varphi_{JSU}(\xi)$ and $\varphi_{JSB}(\xi)$ of Equations (7) are respectively referred to as the Johnson SU (JSU) distribution and the Johnson SB (JSB) distribution. Fig. 2 illustrates combinations of skewness and kurtosis, and the distribution category of these corresponding combinations. $\gamma$, $\delta$, $\lambda$, $\zeta$ in Equation (7) are referred to as Johnson distribution parameters, and are, similarly to the distribution category, determined by the combination of skewness and kurtosis. A distribution function can be found quickly by employing numerical calculations to determine distribution categories and the Johnson distribution parameters corresponding to combinations of skewness and kurtosis, and making a database of the results obtained thereby. Table 1 illustrates typical combinations of parameters corresponding to skewness and kurtosis. Moreover, Fig. 3 illustrates the shapes of distributions of skewness and kurtosis.

[Table 1]

| $S_{sk}$ | $S_{ku}$ | Mode | $\gamma$ | $\delta$ | $\Lambda$ | $\zeta$ |
|------|------|------|----|----|----|----|
| 0.4 | 3.0 | JSB | a1 | a2 | a3 | a4 |
| 0.8 | 3.0 | JSB | b1 | b2 | b3 | b4 |
| -0.4 | 3.0 | JSB | c1 | c2 | c3 | c4 |
| -0.8 | 3.0 | JSB | d1 | d2 | d3 | d4 |
| 0.0 | 2.2 | JSB | e1 | e2 | e3 | e4 |
| 0.0 | 3.8 | JSU | f1 | f2 | f3 | f4 |

A method to derive the parameters of the Johnson distribution follows the sequence (1) to (5) given below.
(1) First, whether to employ the equation for JSB or JSU is determined from the required $S_{sk}$, and $S_{ku}$ values, according to the relationships illustrated in Fig. 2.
(2) Appropriate initial values are given to $\gamma$, $\delta$, $\lambda$, and $\zeta$.
(3) A distribution $\Phi$ is calculated from the $\gamma$, $\delta$, $\lambda$, and $\zeta$, and $\Phi$ is substituted into Equation (4) and Equation (5) to get $S_{sk}$, and $S_{ku}$. Equation (4) and Equation (5) need to be rendered dimensionless when this is performed.
(4) When the values of $S_{sk}$, and $S_{ku}$ found with Equation (3) and the required values of $S_{sk}$, and $S_{ku}$ are different values, then the values of $\gamma$, $\delta$, $\lambda$, and $\zeta$ are updated.
(5) (2) to (4) in the above sequence are repeated until the values of the $S_{sk}$, and $S_{ku}$ and the required values of the $S_{sk}$, and $S_{ku}$ are close enough. Rapid convergence can be achieved by giving appropriate values at (2). Moreover, when updating, the updating at (4) follows an optimization method and so updating is performed with good efficiency. Examples of optimization methods include annealing methods, tabu search methods, and the like.

A roughness distribution corresponding to the skewness and kurtosis values can be computed by employing the above Johnson distribution; however, it is the asperity height distribution that is employed in calculations with an asperity contact model. As illustrated in Fig. 4, generally, roughness distribution differs from asperity height distribution, and the asperity height distribution is a probability density function defining the probability of a height of an asperity peak from the reference plane being a particular height. Namely, when a roughness distribution is transformed by using a Johnson distribution, the asperity height distribution is transformed into a different corresponding shape of distribution.
The method for transforming the asperity height distribution is given as follows. The relationships of the Equations (8) given below hold between cumulative distribution functions $\varphi_{JSU}(\xi)$ and $\varphi_{JSB}(\xi)$ for a Johnson distribution function, and a cumulative distribution function $\Phi(\xi)$ for a Gaussian distribution.

$$\Phi_{JSU}(\xi) = \Phi\left(\gamma + \delta \sinh^{-1}\left(\frac{\xi - \zeta}{\lambda}\right)\right)$$
$$\Phi_{JSB}(\xi) = \Phi\left(\gamma + \delta \ln\left(\frac{\xi - \zeta}{\lambda - \xi + \zeta}\right)\right) \quad \ldots(8)$$

This means that when $\xi_0$ is a dimensionless height at discrete points in a roughness distribution that follows a Gaussian distribution, and $\xi$ is the dimensionless height at discrete points after Johnson transformation, the relationships of Equations (9) given below are established between $\xi_0$ and $\xi$.

$$\xi_0 = \gamma + \delta \sinh^{-1}\left(\frac{\xi - \zeta}{\lambda}\right) \quad \text{(JSU)}$$
$$\xi_0 = \gamma + \delta \ln\left(\frac{\xi - \zeta}{\lambda - \xi + \zeta}\right) \quad \text{(JSB)} \quad \ldots(9)$$

In order to transform the asperity height distribution similarly to a Johnson distribution, the asperity height distribution transformation can be found by using these relationships. Let the asperity height distribution function prior to transformation be $\varphi_0(\xi_0)$ and the asperity height distribution function after transformation be $\varphi(\xi)$. Then if an asperity positioned at a height $\xi$ prior to transformation is moved to a height $\xi_0$ after transformation, then the relationship equation given below is established.

$$\int_{-\infty}^{\xi} \phi(\xi')d\xi' = \int_{-\infty}^{\xi_0} \phi_0(\xi')d\xi' \quad \ldots(10)$$

The Equations (11) given below are obtained by differentiating Equation (10) with respect to height $\xi$.

$$\phi(\xi) = f(\xi)\phi_0(\xi_0)$$
$$f(\xi) = \frac{d\xi_0}{d\xi} = \begin{cases} \dfrac{\delta}{\lambda \cosh\left(\dfrac{\xi_0 - \gamma}{\delta}\right)} & \text{(JSU)} \\[4ex] \dfrac{\delta\left\{1 + \exp\left(\dfrac{\xi_0 - \gamma}{\delta}\right)\right\}^2}{\lambda \exp\left(\dfrac{\xi_0 - \gamma}{\delta}\right)} & \text{(JSB)} \end{cases} \quad \ldots(11)$$

Thus, if the asperity height distribution $\varphi_0(\xi)$ prior to transformation is known, then the asperity height distribution function after transformation can be found analytically. In the exemplary embodiment of the present invention, a GSE model expressing distributions of asperity height and curvature is employed as the asperity height distribution function prior to transformation. The GSE model asperity height distribution function is expressed by the Equation (12) given below.

$$\phi_0(\xi, g) = \frac{9}{2\sqrt{2\pi}} \sqrt{\frac{\alpha}{\alpha - 1}} g^3 \, \text{erfc} \left\{ \sqrt{\frac{\alpha - 1}{2(2\alpha - 3)}} \left( 3g - \frac{\xi \sqrt{\alpha}}{\alpha - 1} \right) \right\} \exp \left( -\frac{\alpha \xi^2}{2(\alpha - 1)} + \frac{3}{2} g^2 \right)$$

$$\ldots(12)$$

Wherein g is an asperity curvature (dimensionless asperity curvature) produced by rendering the cross-sectional curvature $\sigma_k$ dimensionless. Integrating this equation over the entire range of g gives a distribution for the heights of asperity peaks. $\alpha$ is a dimensionless number referred to as a Nayak parameter, and can be expressed in the manner given below in terms of input parameters $\eta$, $\sigma$, and $\sigma_k$.

$$\alpha = 6\pi\sqrt{3} \, \frac{\eta \sigma}{\sigma_k}$$

$$\ldots(13)$$

Asperity Curvature Transformation
In a GSE model described in "A simplified elliptic model of rough surface contact", the real contact area $A_r$ for a rough surface and a smooth surface is expressed by the Equation (14) given below.

$$A_r = \frac{1}{6\sqrt{3}} \frac{\sqrt{\alpha}}{\sigma} A_n \int_g \int_\xi \frac{1}{g} \langle \sigma\xi - d \rangle \phi \, d\xi \, dg$$

$$\ldots(14)$$

Moreover, a normal force W is expressed by the Equation (15) given below.

$$W = \frac{2}{9\sqrt{3}\,\pi} \frac{\sqrt{\alpha \sigma_k}}{\sigma} A_n E' \int_g \int_\xi \frac{1}{\sqrt{g}} \langle \sigma\xi - d \rangle^{3/2} \phi \, d\xi \, dg$$

$$\ldots(15)$$

$\langle \cdot \rangle$ is Macaulay bracket notation and is defined by the Equation (16) given below.

$$\langle x \rangle = \begin{cases} x & (x > 0) \\ 0 & (x \leq 0) \end{cases}$$

$$\ldots(16)$$

The Equation (17) and Equation (18) given below are obtained by deriving the real contact area $A_r$ and the normal force W of contact between rough surfaces having different surface characteristics.

$$A_r = \frac{1}{108} \frac{\sqrt{\alpha_1 \alpha_2}}{\sigma_1 \sigma_2} A_n \int_{g_2} \int_{g_1} \int_{\xi_2} \int_{\xi_1} \frac{1}{g_1 g_2} \langle \sigma_1 \xi_1 + \sigma_2 \xi_2 - d \rangle^2 \phi_1 \phi_2 \, d\xi_1 \, d\xi_2 \, dg_1 \, dg_2$$

$$\ldots(17)$$

$$W = \frac{4}{405\pi} \frac{\sqrt{\alpha_1 \alpha_2}}{\sigma_1 \sigma_2} A_n E' \int_{g_2} \int_{g_1} \int_{\xi_2} \int_{\xi_1} \frac{\sqrt{\sigma_{k1} g_1 + \sigma_{k2} g_2}}{g_1 g_2} \langle \sigma_1 \xi_1 + \sigma_2 \xi_2 - d \rangle^{5/2} \phi_1 \phi_2 \, d\xi_1 \, d\xi_2 \, dg_1 \, dg_2$$

$$\ldots(18)$$

Wherein d is a separation distance between reference planes of the two rough surfaces, and when rendered dimensionless by the composite roughness $\sigma*$, is called a ratio of film thickness. $\varphi1$ is the asperity height distribution function of rough surface 1, and φ2 is the asperity height distribution function of rough surface 2.

In a GSE model, a double integral is taken with respect to a dimensionless height $\xi$ and a dimensionless curvature g of a rough surface; however, in the exemplary embodiment of the present invention, a quadruple integral is taken with respect to a dimensionless height $\xi_i$ and a dimensionless curvature $g_i$ of the rough surface 1 and rough surface 2, respectively, as shown by above Equation (17) and Equation (18).

Substituting the asperity height distribution and the input parameters computed by the previous processes into Equation (17) and Equation (18) enables the real contact area and the normal force to be found. Moreover, in the present invention, a correction is performed on the curvature in Equation (17) and Equation (18) by the two methods given below.

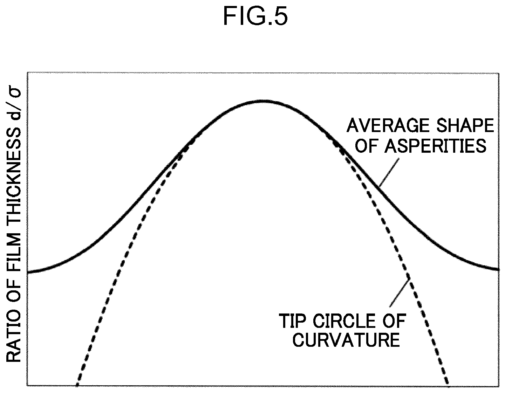

First, all traditional roughness asperity contact models assume that the shape of asperities is semi-spherical with uniform radius of curvature. However, it is more appropriate to think of actual roughness asperities as having a curvature that gradually changes on progression away from the tip, rather than as being perfect spheres. Thus, the shapes of asperities on numerically generated rough surfaces were investigated and averaged. Fig. 5 illustrates these results. It is apparent that asperities widen more than the circle of curvature at the tip. Since it is difficult to rigorously consider change to the shape of asperities and to input this into calculations, a simplification is adopted here by applying a constant scale factor correction to the radius of curvature at the tip.

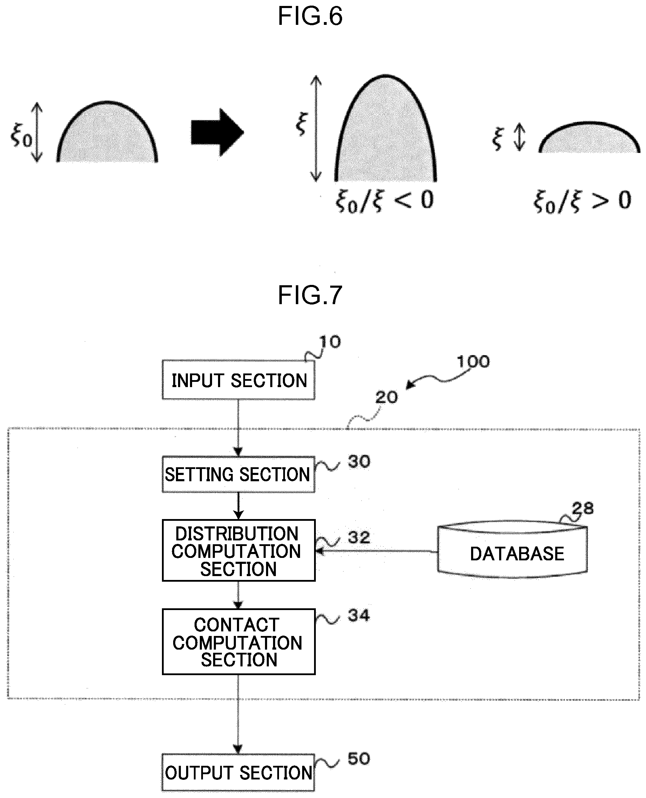

Second, a correction is made to asperity curvature in Johnson transformation. In a Johnson distribution, the height distribution of roughness is transformed, and accordingly the curvature of respective asperities is also changed. For example, as illustrated in Fig. 6, the radius of curvature of the asperities is smaller in cases in which the shape of asperities is transformed by stretching the asperities in the height direction. The radius of curvature of the asperities is larger in opposite cases in which the asperities are transformed by compressing in the height direction. Whether an asperity is stretched or compressed is determined by the height at the position of the asperity. Let the height of an asperity tip be $\xi_0$, then the change in curvature at a height $\xi$ after transformation is equivalent to f($\xi$) in above Equation (11). However, due to the asperity curvature at portions other than the tip similarly changing according to the height position, it is extremely difficult to calculate the curvature change for the entire asperity. Thus, in the exemplary embodiment of the present invention, a height of a fixed distance below the asperity peak is employed for the transformation.

Expressing the transformation to asperity curvature resulting from the above two operations in a single equation gives rise to the following.

$$g' = g/\{\epsilon f(\xi - c)\} \quad \ldots(19)$$

Wherein, g is the asperity curvature prior to transformation, g' is the asperity curvature after transformation, $\epsilon$ is a coefficient to correct the width of asperity shape on an actual rough surface, and c is a reference distance for asperity curvature change in Johnson transformation.

Revising Equations (17) and (18) using the corrected asperity curvature gives the Equations (20) and (21) given below.

$$A_r = \frac{1}{108} \frac{\sqrt{\alpha_1 \alpha_2}}{\sigma_1 \sigma_2} A_n \int_{g_2} \int_{g_1} \int_{\xi_2} \int_{\xi_1} \frac{1}{g'_1 g'_2} (\sigma_1 \xi_1 + \sigma_2 \xi_2 - d)^2 \phi_1 \phi_2 d\xi_1 d\xi_2 dg_1 dg_2 \quad \ldots(20)$$

$$W = \frac{4}{405\pi} \frac{\sqrt{\alpha_1 \alpha_2}}{\sigma_1 \sigma_2} A_n E' \int_{g_2} \int_{g_1} \int_{\xi_2} \int_{\xi_1} \frac{\sqrt{\sigma_{k1} g'_1 + \sigma_{k2} g'_2}}{g'_1 g'_2} (\sigma_1 \xi_1 + \sigma_2 \xi_2 - d)^{5/2} \phi_1 \phi_2 d\xi_1 d\xi_2 dg_1 dg_2 \quad \ldots(21)$$

Performing these calculations enables the real contact area and the normal force to be computed for contact between rough surfaces having given surface characteristics.

However, using Equations (20) and (21) as they are would result in a large calculation cost due to the quadruple integral, and so operators such as those of Equations (22) and (23) below are defined.

$$F_i = \int_0^\infty \frac{\phi_i}{g'_i} dg_i \quad \ldots(22)$$

$$G = \int_0^\infty \int_0^\infty \sqrt{\sigma_{k1} g_1' + \sigma_{k2} g_2'} \frac{\phi_1}{g_1'} \frac{\phi_2}{g_2'} \, dg_1 dg_2 \qquad \ldots(23)$$

Employing the operators F and G as defined above gives a real contact area $A_r$ and a normal force W as expressed by Equations (24) and (25) given below.

$$A_r = \frac{1}{108} \frac{\sqrt{\alpha_1 \alpha_2}}{\sigma_1 \sigma_2} A_n \int_{\xi_2} \int_{\xi_1} \langle \sigma_1 \xi_1 + \sigma_2 \xi_2 - d \rangle^2 F_1 F_2 d\xi_1 d\xi_2 \qquad \ldots(24)$$

$$W = \frac{4}{405\pi} \frac{\sqrt{\alpha_1 \alpha_2}}{\sigma_1 \sigma_2} A_n E' \int_{\xi_2} \int_{\xi_1} \langle \sigma_1 \xi_1 + \sigma_2 \xi_2 - d \rangle^{5/2} G d\xi_1 d\xi_2 \qquad \ldots(25)$$

For actual numerical calculations, these operators may be calculated in advance with respect to $\xi$ and substituted therein, enabling the real contact area $A_r$ and the normal force W to be computed at a cost similar to that of a double integral.

Configuration of Arithmetic Unit According to Exemplary Embodiment of the Present Invention.

Next, explanation follows regarding a configuration of an arithmetic unit according to the exemplary embodiment of the present invention. As illustrated in Fig. 7, an arithmetic unit 100 according to the exemplary embodiment of the present invention can be configured by a computer including a CPU, RAM, and ROM stored with a program and various data for executing an arithmetic processing routine, described later. The arithmetic unit 100 includes an input section 10, an arithmetic section 20, and an output section 50, as illustrated functionally in Fig. 7.

The input section 10 receives a power spectral density $P_i(k)$, Young's Modulus $E_i$, Poisson's ratio $v_i$, and nominal contact area $A_n$ for when two rough surfaces contact each other. The input section 10 also receives the skewness $S_{ski}$ and the kurtosis $S_{kui}$ for each of the two rough surfaces.

The arithmetic section 20 is configured including a database 28, a setting section 30, a distribution computation section 32, and a contact computation section 34.

The values of parameters $\gamma, \delta, \lambda, \zeta$ of Johnson distributions corresponding to various skewness and kurtosis are stored in the database 28, as illustrated in Table 1 above.

Based on the power spectral density $P_i(k)$, Young's Modulus $E_i$, Poisson's ratio $v_i$, nominal contact area $A_n$, skewness $S_{ski}$, and kurtosis $S_{kui}$ for when the two rough surfaces contact each other, which have been received from the input section 10, the setting section 30 sets surface characteristics including the skewness and kurtosis of each of the two rough surfaces as calculation conditions. The setting section 30 also computes the root mean square roughness $\sigma_i$, the cross-sectional curvature $\sigma_{ki}$, and the asperity density $\eta_i$ as calculation conditions using above Equations (2) based on the power spectral density $P_i(k)$. The setting section 30 also computes the equivalent Young's Modulus E' as a calculation condition using above Equation (6).

Based on the calculation conditions set in the setting section 30, the distribution computation section 32 acquires a roughness distribution, which is a probability density function defining a probability of a height from the reference plane being a particular height, corresponding to the skewness and kurtosis combination for each of the two rough surfaces. The distribution computation section 32 then computes, from the roughness distribution, an asperity height distribution $\varphi_i(\xi)$, which is a probability density function defining a probability of a height of an asperity peak from the reference plane being a particular height. The GSE model expressed by above Equation (12) is employed as the asperity height distribution function $\varphi_0(\xi)$ prior to transformation, and the asperity height distribution function $\varphi_i(\xi)$ after transformation is computed from the roughness distribution. The GSE model represents a probability density function defining, as the asperity height distribution, a probability of a height of an asperity peak from the reference plane being a particular height, and defining a probability of a curvature of an asperity peak being a particular curvature. The GSE model is also an asperity height distribution for roughness distributions that are Gaussian distributions. An asperity height distribution $\varphi_i(\xi)$ is then computed according to above Equation (11) by transforming the GSE model to the asperity height distribution $\varphi_i(\xi)$ for when the roughness distributions are Johnson distributions according to above Equations (8) expressed by employing parameters determined by the respective combinations of skewness and kurtosis. When transforming the asperity height distribution, the asperity height distribution $\varphi_i(\xi)$ is computed by using the above Equation (19) to correct the curvature of asperity peak for each of the heights of the asperity peaks, according to the asperity height distribution transformation when the roughness distributions are Johnson distributions.

Based on the equivalent Young's Modulus E' and the nominal contact area $A_n$ set as calculation conditions by the setting section 30, and on the asperity height distribution $\varphi_i(\xi)$ computed for each of the two rough surfaces, the contact computation section 34 computes the real contact area $A_r$, which is the actual contact area when the two rough surfaces are in contact, and the normal force W according to the above Equations (24) and (25). When doing so, the real contact area $A_r$ and the normal force W are computed by employing the operators F expressing the integrals of the asperity height distributions integrated by prior calculation according to above Equation (22), and the operator G expressing the integral of the combination of the two asperity height distributions that has been integrated by prior calculation according to above Equation (23).

Operation of Arithmetic Unit According to a First Exemplary Embodiment.

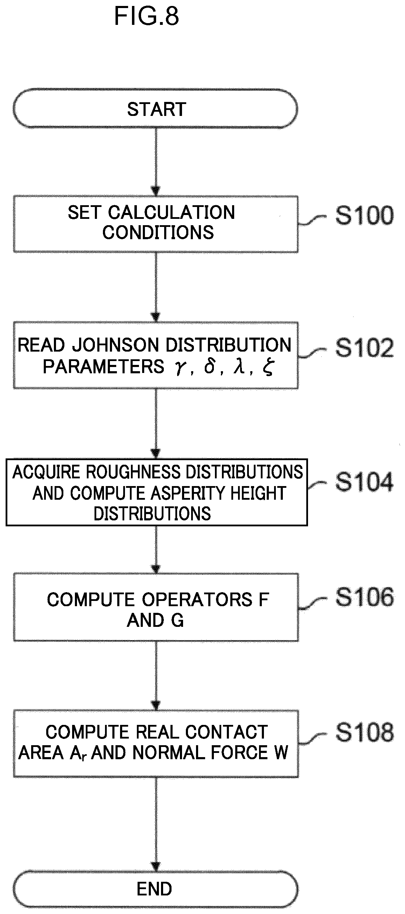

Next, explanation follows regarding operation of the arithmetic unit 100 according to a first exemplary embodiment. The arithmetic unit 100 executes the arithmetic processing routine illustrated in Fig. 8 on receipt of the power spectral density $P_i(k)$, Young's Modulus $E_i$, Poisson's ratio $v_i$, nominal contact area $A_n$, skewness $S_{ski}$, and kurtosis $S_{kui}$ for when the two rough surfaces contact each other from the input section 10.

First, at step S100, surface characteristics including the skewness and kurtosis for each of the two rough surfaces are set as calculation conditions based on the power spectral density $P_i(k)$, Young's Modulus $E_i$, Poisson's ratio $v_i$, nominal contact area $A_n$, skewness $S_{ski}$, and kurtosis $S_{kui}$ for when the two rough surfaces contact each other, which have been received from the input section 10.

Next, at step S102, the values of the Johnson distribution parameters $\gamma$, $\delta$, $\lambda$, $\zeta$ are read from the database 28 based on the skewness $S_{ski}$ and kurtosis $S_{kui}$ for each of the two rough surfaces received by the input section 10.

At step S104, based on the calculation conditions set by the setting section 30 and the Johnson distribution parameters $\gamma$, $\delta$, $\lambda$, $\zeta$ read at step S102, a roughness distribution, which is a probability density function defining a probability of a height from the reference plane being a particular height, according to the above Equations (8) is acquired for each of the two rough surfaces corresponding to the respective skewness and kurtosis combination. The asperity height distribution $\varphi_i(\xi)$, which is a probability density function defining a probability of a height of an asperity peak from the reference plane being a particular height, is then computed according to above Equation (11) from the roughness distributions.

At step S106, the operators F expressing the integrals of the asperity height distributions is computed by integration by calculation according to above Equation (22), and the operator G expressing the integral of the combination of the two asperity height distributions is computed by calculation according to above Equation (23).

At step S108, based on the Young's Modulus $E_i$ and nominal contact area $A_n$ received by the input section 10, the asperity height distributions $\varphi_i(\xi)$ computed for each of the two rough surfaces, and the operator F and operator G computed at above step S106, the real contact area $A_r$, which is the actual contact area when the two rough surfaces are in contact, and the normal force W are computed according to the above Equations (24) and (25). The real contact area $A_r$ and the normal force W are then output to the output section 50, and the processing is ended.

Test Results

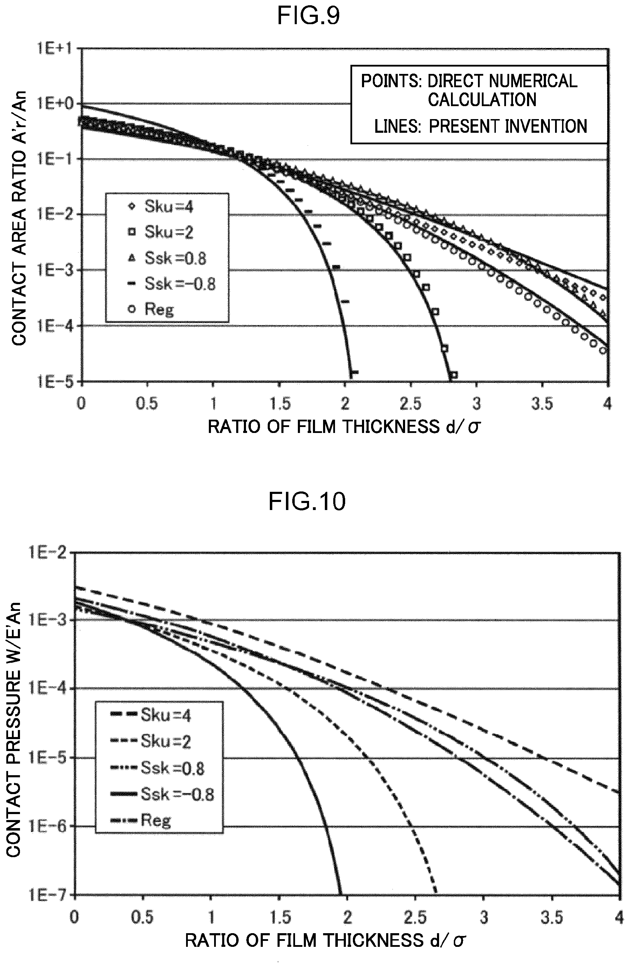

Fig. 9 illustrates real contact area when rough surfaces having the same skewness and kurtosis are placed in contact with each other in a comparison of results computed by the method of the exemplary embodiment of the present invention against results computed by direct numerical calculation.

A 2D-Weierstrass-Mandelbrot function (referred to below as WM function) is employed as the method to generate rough surfaces numerically. A detailed method of the WM function may, for example, employ a method of 'Inclusion of "interaction" in the Greenwood and Williamson contact theory' (Ciavarella, M., Greenwood, J. A., & Paggi, M., 2008, Wear, 265(5), pages 729-734).

The real contact area $A'_r$ indicates a projected area of overlapping portions between rough surfaces when deformation is ignored, and is equivalent to twice the real contact area $A_r$ under the assumption of elastic deformation. As illustrated in Fig. 9, there is an extremely good fit between the real contact area computed by the method of the exemplary embodiment of the present invention and the real contact area computed by direction numerical calculation. However, there is no existing technology that enables calculation for rough surfaces having the same skewness and kurtosis that are placed in contact with each other. Fig. 10 illustrates the normal force when rough surfaces having the same skewness and kurtosis are placed in contact with each other. Note that Reg in Fig. 9 and Fig. 10 expresses a case of Gaussian distribution.

As explained above, the arithmetic unit according to the exemplary embodiment of the present invention is capable of computing contact conditions of rough surfaces each having a specified skewness and kurtosis. This is achieve by acquiring a roughness distribution, which is a probability density function defining a probability of a height from a reference plane being a particular height, corresponding to a combination of skewness and kurtosis, and computing from the roughness distribution an asperity height distribution, which is a probability density function defining a probability of a height of an asperity peak from a reference plane being a particular height. Then, based on the asperity height distribution computed for each of two rough surfaces, a real contact area, which is an actual contact area when the two rough surfaces are in contact, or a normal force when the two rough surfaces are in contact, is computed.

Note that the present invention is not limited to the exemplary embodiment described above, and various modifications and applications may be made within a scope not departing from the spirit of the invention.

For example, although in the exemplary embodiment described above, an example has been explained of a case in which the curvature of asperity peak for each of the heights of the asperity peaks is corrected by employing Equation (19), there is no limitation thereto. In cases in which the curvature of asperity peak is not corrected, the real contact area $A_r$ and the normal force W may be computed by calculating g instead of the above g'.

For example, although in the exemplary embodiment described above, an example has been explained of a case in which the real contact area $A_r$ and the normal force W are computed, there is no limitation thereto. One out of the real contact area $A_r$ or the normal force W may be computed alone.

## Claims

1. An arithmetic unit (100) that is adapted to predict a contact area or a normal force arising in a case in which two rough surfaces are in contact with each other, the arithmetic unit comprising:

   a setting section (30) that is adapted to set surface characteristics including a skewness and a kurtosis for each of the two rough surfaces as calculation conditions;
   a distribution computation section (32) that is adapted to, based on the calculation conditions, acquire for each of the two rough surfaces a roughness distribution, which is a probability density function defining a probability of a height from a reference plane being a particular height, corresponding to a combination of skewness and kurtosis, and compute from the roughness distributions an asperity height distribution, which is a probability density function defining a probability of a height of an asperity peak from a reference plane being a particular height; and
   a contact computation section (34) that is adapted to, based on the asperity height distribution computed for each of the two rough surfaces, compute a real contact area, which is an actual contact area in a case in which the two rough surfaces are in contact, or a normal force in a case in which the two rough surfaces are in contact.

2. The arithmetic unit of claim 1, wherein the distribution computation section (32) is adapted to compute the asperity height distributions for a case in which the roughness distributions are Johnson distributions expressed by employing parameters determined by the respective combinations of skewness and kurtosis.

3. The arithmetic unit of claim 2, wherein the distribution computation section (32) is adapted to compute the asperity height distribution, by taking as the asperity height distribution a Greenwood simplified elliptic model expressing a probability density function defining a probability of a height of an asperity peak from the reference plane being a particular height and defining a probability of a curvature of an asperity peak being a particular curvature, and by transforming the asperity height distribution for the case in which the roughness distributions are given by Johnson distributions expressed by employing parameters determined by the respective combinations of skewness and kurtosis.

4. The arithmetic unit of claim 3, wherein, in a case of transforming the asperity height distribution, the distribution computation section (32) is adapted to compute the asperity height distribution so as to correct a curvature of asperity peak for each height of asperity peak according to the asperity height distribution transformation for the case in which the roughness distributions are Johnson distributions.

5. The arithmetic unit of any one of claim 1 to claim 4, wherein the contact computation section (34) is adapted to compute the real contact area or the normal force by employing operators expressing integrals of the asperity height distributions integrated by calculations performed in advance, and an operator expressing an integral of a combination of two of the asperity height distributions integrated by a calculation performed in advance.

6. A method of predicting a contact area or a normal force arising in a case in which two rough surfaces are in contact with each other, the method comprising:

setting surface characteristics including a skewness and a kurtosis for each of the two rough surfaces as calculation conditions;

based on the calculation conditions, acquiring for each of the two rough surfaces a roughness distribution, which is a probability density function defining a probability of a height from a reference plane being a particular height, corresponding to a combination of skewness and kurtosis, and computing from the roughness distributions an asperity height distribution, which is a probability density function defining a probability of a height of an asperity peak from a reference plane being a particular height; and

based on the asperity height distribution computed for each of the two rough surfaces, computing a real contact area, which is an actual contact area in a case in which the two rough surfaces are in contact, or a normal force in a case in which the two rough surfaces are in contact.

7. A program comprising computer-executable instructions which, when executed by a computer such as an arithmetic unit, cause the computer to perform the method of claim 6.

**Patentansprüche**

1. Recheneinheit (100), die zum Voraussagen einer Kontaktfläche oder einer Normalkraft, die auftritt, wenn zwei raue Oberflächen in Kontakt miteinander sind, angepasst ist, mit:

einem Einstellabschnitt (30), der zum Einstellen von Oberflächencharakteristiken, einschließlich einer Schiefe und einer Kurtosis, für jede der zwei rauen Oberflächen als Berechnungsbedingungen angepasst ist;
einem Verteilungsberechnungsabschnitt (32), der dazu angepasst ist, basierend auf den Berechnungsbedingungen für jede der zwei rauen Oberflächen eine Rauigkeitsverteilung zu erfassen, die eine Wahrscheinlichkeitsdichtefunktion ist, die eine Wahrscheinlichkeit definiert, dass eine Höhe von einer Bezugsebene eine bestimmte Höhe ist, entsprechend einer Kombination aus Schiefe und Kurtosis, und anhand der Rauigkeitsverteilungen eine Oberflächenunebenheitsverteilung zu berechnen, die eine Wahrscheinlichkeitsdichtefunktion ist, die eine Wahrscheinlichkeit definiert, dass eine Höhe eines Oberflächenunebenheitspeaks von einer Bezugsebene eine bestimmte Höhe ist; und
einem Kontaktberechnungsabschnitt (34), der dazu angepasst ist, basierend auf der Oberflächenunebenheitsverteilung, die für jede der zwei rauen Oberflächen berechnet wird, eine echte Kontaktfläche, die eine tatsächliche Kontaktfläche in einem Fall, in dem die zwei rauen Oberflächen in Kontakt sind, ist, oder eine Normalkraft in einem Fall, in dem die zwei rauen Oberflächen in Kontakt sind, zu berechnen.

2. Recheneinheit nach Anspruch 1, bei der der Verteilungsberechnungsabschnitt (32) dazu angepasst ist, die Oberflächenunebenheitsverteilungen für einen Fall, in dem die Rauigkeitsverteilungen Johnson-Verteilungen sind, die unter Verwendung von Parametern, die durch die jeweiligen Kombinationen aus Schiefe und Kurtosis bestimmt sind, ausgedrückt sind, zu berechnen.

3. Recheneinheit nach Anspruch 2, bei der der Verteilungsberechnungsabschnitt (32) dazu angepasst ist, die Oberflächenunebenheitsverteilung zu berechnen, indem als die Oberflächenunebenheitsverteilung ein vereinfachtes elliptisches Greenwood-Modell verwendet wird, das eine Wahrscheinlichkeitsdichtefunktion ausdrückt, die eine Wahrscheinlichkeit definiert, dass eine Höhe eines Oberflächenunebenheitspeaks von der Bezugsebene eine bestimmte Höhe ist, und eine Wahrscheinlichkeit definiert, dass eine Krümmung eines Oberflächenunebenheitspeaks eine bestimmte Krümmung ist, und indem die Oberflächenunebenheitsverteilung für den Fall, in dem die Rauigkeitsverteilungen durch Johnson-Verteilungen gegeben sind, die unter Verwendung von Parametern, die durch die jeweiligen Kombinationen aus Schiefe und Kurtosis bestimmt sind, ausgedrückt sind, transformiert wird.

4. Recheneinheit nach Anspruch 3, bei der im Fall einer Transformation der Oberflächenunebenheitsverteilung der Verteilungsberechnungsabschnitt (32) dazu angepasst ist, die Oberflächenunebenheitsverteilung zum Korrigieren einer Krümmung eines Oberflächenunebenheitspeaks für jede Höhe eines Oberflächenunebenheitspeaks gemäß der Oberflächenunebenheitsverteilungstransformation für den Fall, in dem die Rauigkeitsverteilungen Johnson-Verteilungen sind, zu berechnen.

5. Recheneinheit nach einem der Ansprüche 1 bis 4, bei der der Kontaktberechnungsabschnitt (34) zum Berechnen der echten Kontaktfläche oder der Normalkraft unter Verwendung von Operatoren, die Integrale der Oberflächenunebenheitsverteilungen ausdrücken, die durch im Voraus durchgeführte Berechnungen integriert werden, und eines Operators, der ein Integral einer Kombination aus zwei der Oberflächenunebenheitsverteilungen ausdrückt, das durch eine im Voraus durchgeführte Berechnung integriert wird, angepasst ist.

6. Verfahren zum Voraussagen einer Kontaktfläche oder einer Normalkraft, die auftritt, wenn zwei raue Oberflächen in Kontakt miteinander sind, mit folgenden Schritten:

Einstellen von Oberflächencharakteristiken, einschließlich einer Schiefe und einer Kurtosis, für jede der zwei rauen Oberflächen als Berechnungsbedingungen;

basierend auf den Berechnungsbedingungen, Erfassen, für jede der zwei rauen Oberflächen, einer Rauigkeitsverteilung, die eine Wahrscheinlichkeitsdichtefunktion ist, die eine Wahrscheinlichkeit definiert, dass eine Höhe von einer Bezugsebene eine bestimmte Höhe ist, entsprechend einer Kombination aus Schiefe und Kurtosis, und Berechnen, anhand der Rauigkeitsverteilungen, einer Oberflächenunebenheitsverteilung, die eine Wahrscheinlichkeitsdichtefunktion ist, die eine Wahrscheinlichkeit definiert, dass eine Höhe eines Oberflächenunebenheitspeaks von einer Bezugsebene eine bestimmte Höhe ist; und

basierend auf der für jede der rauen Oberflächen berechneten Oberflächenunebenheitsverteilung, Berechnen einer echten Kontaktfläche, die eine tatsächliche Kontaktfläche in einem Fall, in dem die zwei rauen Oberflächen in Kontakt sind, ist, oder einer Normalkraft in einem Fall, in dem die zwei rauen Oberflächen in Kontakt sind.

7. Programm mit von einem Computer ausführbaren Anweisungen, die, wenn sie von einem Computer wie einer Recheneinheit ausgeführt werden, bewirken, dass der Computer das Verfahren nach Anspruch 6 durchführt.

## Revendications

1. Unité arithmétique (100) qui est adaptée pour prédire une zone de contact ou une force normale se produisant dans un cas dans lequel deux surfaces rugueuses sont en contact l'une avec l'autre, l'unité arithmétique comprenant :

une section de réglage (30) qui est adaptée pour régler des caractéristiques de surface comprenant une asymétrie et un aplatissement pour chacune des deux surfaces rugueuses comme conditions de calcul ;

une section de calcul de distribution (32) qui est adaptée pour acquérir, sur la base des conditions de calcul, pour chacune des deux surfaces rugueuses, une distribution de rugosité, qui est une fonction de densité de probabilité définissant une probabilité d'une hauteur à partir d'un plan de référence d'être une hauteur particulière, correspondant à une combinaison d'asymétrie et d'aplatissement, et calculer à partir des distributions de rugosité, une distribution de hauteur d'aspérité, qui est une fonction de densité de probabilité définissant une probabilité d'une hauteur d'une pointe d'aspérité à partir d'un plan de référence d'être une hauteur particulière ; et

une section de calcul de contact (34) qui est adaptée pour calculer, sur la base de la distribution de hauteur d'aspérité calculée pour chacune des deux surfaces rugueuses, une zone de contact réelle, qui est une zone de contact actuelle dans un cas dans lequel les deux surfaces rugueuses sont en contact, ou une force normale dans un cas dans lequel les deux surfaces rugueuses sont en contact.

2. Unité arithmétique de la revendication 1, dans laquelle la section de calcul de distribution (32) est adaptée pour calculer les distributions de hauteur d'aspérité pour un cas dans lequel les distributions de rugosité sont des distributions de Johnson exprimées en utilisant des paramètres déterminés par les combinaisons respectives d'asymétrie et d'aplatissement.

3. Unité arithmétique selon la revendication 2, dans laquelle la section de calcul de distribution (32) est adaptée pour calculer la distribution de hauteur d'aspérité, en prenant comme distribution de hauteur d'aspérité un modèle elliptique simplifié de Greenwood exprimant une fonction de densité de probabilité définissant une probabilité de hauteur d'un pic d'aspérité à partir du plan de référence d'être une hauteur particulière et définissant une probabilité d'une courbure d'un pic d'aspérité d'être une courbure particulière, et en transformant la distribution de hauteur d'aspérité pour le cas où les distributions de rugosité sont données par des distributions de Johnson exprimées en utilisant des paramètres déterminés par les combinaisons respectives d'asymétrie et d'aplatissement.

4. Unité arithmétique de la revendication 3, dans laquelle, dans un cas de transformation de la distribution de hauteur d'aspérité, la section de calcul de distribution (32) est adaptée pour calculer la distribution de hauteur d'aspérité afin de corriger une courbure du pic d'aspérité pour chaque hauteur du pic d'aspérité selon la transformation de distribution de hauteur d'aspérité pour le cas dans lequel les distributions de rugosité sont les distributions Johnson.

5. Unité arithmétique selon l'une quelconque des revendications 1 à 4, dans laquelle la section de calcul de contact (34) est adaptée pour calculer la zone de contact réelle ou la force normale en employant des opérateurs exprimant des intégrales des distributions de hauteur d'aspérité intégrées par des calculs effectués à l'avance, et un opérateur exprimant une intégrale d'une combinaison de deux des distributions de hauteur d'aspérité intégrées par un calcul effectué à l'avance.

6. Procédé de prédiction d'une zone de contact ou d'une force normale apparaissant dans un cas où deux surfaces rugueuses sont en contact l'une avec l'autre, le procédé comprenant les étapes consistant à :

régler des caractéristiques de surface, y compris une asymétrie et un aplatissement pour chacune des deux surfaces rugueuses comme conditions de calcul ;

sur la base des conditions de calcul, acquérir pour chacune des deux surfaces rugueuses une distribution de rugosité, qui est une fonction de densité de probabilité définissant une probabilité d'une hauteur à partir d'un plan de référence d'être une hauteur particulière, correspondant à une combinaison d'asymétrie et d'aplatissement, et calculer à partir des distributions de rugosité une distribution de hauteur d'aspérité, qui est une fonction de densité de probabilité définissant une probabilité d'une hauteur d'un pic d'aspérité à partir d'un plan de référence d'être une hauteur donnée ; et

sur la base de la distribution de hauteur d'aspérité calculée pour chacune des deux surfaces rugueuses, calculer une zone de contact réelle, qui est une zone de contact actuelle dans un cas dans lequel les deux surfaces rugueuses sont en contact, ou une force normale dans un cas dans lequel les deux surfaces rugueuses sont en contact.

7. Programme comprenant des instructions exécutables par ordinateur qui, lorsqu'elles sont exécutées par un ordinateur tel qu'une unité arithmétique, amènent l'ordinateur à exécuter le procédé de la revendication 6.

# FIG.1

# FIG.2

FIG.3

FIG.4

ASPERITY PEAKS

ROUGHNESS
REFERENCE
PLANE

ROUGHNESS PROFILE          ROUGHNESS          ASPERITY
                          DISTRIBUTION        HEIGHT
                                           DISTRIBUTION

FIG.5

FIG.6

$$\xi_0 \quad \Longrightarrow \quad \xi \quad \xi_0/\xi < 0 \qquad \xi \quad \xi_0/\xi > 0$$

FIG.7

INPUT SECTION    10

100

20

SETTING SECTION    30

DISTRIBUTION COMPUTATION SECTION    32

DATABASE    28

CONTACT COMPUTATION SECTION    34

OUTPUT SECTION    50

# FIG.8

```
         ┌─────────────────────┐
         │        START        │
         └─────────────────────┘
                    │
                    ▼
    ┌─────────────────────────────┐
    │      SET CALCULATION        │ ─── S100
    │        CONDITIONS           │
    └─────────────────────────────┘
                    │
                    ▼
    ┌─────────────────────────────┐
    │  READ JOHNSON DISTRIBUTION  │ ─── S102
    │  PARAMETERS $\gamma$, $\delta$, $\lambda$, $\xi$ │
    └─────────────────────────────┘
                    │
                    ▼
    ┌─────────────────────────────┐
    │ ACQUIRE ROUGHNESS DISTRIBUTIONS │ ─── S104
    │ AND COMPUTE ASPERITY HEIGHT │
    │        DISTRIBUTIONS        │
    └─────────────────────────────┘
                    │
                    ▼
    ┌─────────────────────────────┐
    │     COMPUTE OPERATORS F     │ ─── S106
    │          AND G              │
    └─────────────────────────────┘
                    │
                    ▼
    ┌─────────────────────────────┐
    │     COMPUTE REAL CONTACT    │ ─── S108
    │  AREA $A_r$ AND NORMAL FORCE W │
    └─────────────────────────────┘
                    │
                    ▼
         ┌─────────────────────┐
         │         END         │
         └─────────────────────┘
```

## FIG.9

## FIG.10

FIG.11

HERTZ CONTACT

REFERENCE PLANE
(SMOOTH SURFACE)

$d$

$\beta$

$z$

REFERENCE PLANE
(ROUGH SURFACE)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000500604 A

- WO 9717695 A

**Non-patent literature cited in the description**

- **GREENWOOD, J. A.** A simplified elliptic model of rough surface contact. *Wear,* 2006, vol. 261 (2), 191-200

- **CIAVARELLA, M. ; GREENWOOD, J. A. ; PAGGI, M.** Inclusion of "interaction" in the Greenwood and Williamson contact theory. *Wear,* 2008, vol. 265 (5), 729-734